# EUROPEAN PATENT SPECIFICATION

(11) **EP 0 357 105 B1**
(45) Date of publication and mention of the grant of the patent: **20.10.1993**
(21) Application number: 89201923.3
(22) Date of filing: 21.07.1989
(51) Int. Cl.: F16J 15/40

(54) **Sealing device with a magnetic liquid**
Dichtungsvorrichtung mit einer magnetischen Flüssigkeit
Dispositif d'étanchéité à fluide magnétique

(30) Priority: 02.08.1988 NL 8801925
(43) Date of publication of application: 07.03.1990
(73) Proprietor: SKF Industrial Trading & Development Co, B.V., NL-3439 MT Nieuwegein (NL)
(72) Inventor: Tadic, Vedran Andelo, Culemborg (NL); Andersson, Börje, Dr., Sandared (SE)
(74) Representative: de Bruijn, Leendert C.

(56) References cited:
- EP-A- 0 182 656
- EP-A- 0 267 632
- PATENT ABSTRACTS OF JAPAN, vol. 3, no. 134 (M-79), 9th November 1979, page 10 M 79; & JP-A-54 108 160 (MITSUBISHI DENKI K.K.) 24-08-1979
- PATENT ABSTRACTS OF JAPAN, vol. 9, no. 261 (M-422)[1984], 18th October 1985; & JP-A-60 109 669 (TOKYO SANYO DENKI K.K.) 15-06-1985
- PATENT ABSTRACTS OF JAPAN, vol. 5, no. 2 (M-49)[674], 9th January 1981; & JP-A-55 135 269 (NIPPON OIL SEAL KOGYO K.K.) 21-10-1980
- PATENT ABSTRACTS OF JAPAN, vol. 6, no. 71 (M-126)[949], 6th May 1982; & JP-A-57 12 167 (NIPPON SEIKO K.K.) 22-01-1982

## Description

The invention relates to a sealing assembly for the purpose of forming a seal by means of a magnetic liquid around a shaft capable of being driven in rotation, comprising a permanent magnet and at least one armature being in connection with one of the poles thereof, of which armature the free end is situated at a short distance from the shaft to form an annular sealing gap filled with a quantity of the magnetic liquid, which is held within the said sealing gap by the magnetic field set up by the permanent magnet by way of the armature. whereby at least one covering member is mounted on the armature which covering member has a lip-like end directed outward in relation to that side and towards the shaft. Such a sealing assembly is known from Japanese patent application JP-A-54108160(1979).

Sealing assemblies of this type are used especially for the drive spindles of computer disks, in order to prevent any lubricant, vapor and/or dust from getting within reach of the magnetic disks.

In sealing assemblies of this type, the degree of the static pressure of the magnetic liquid in the sealing gap is critical for proper performance of the assembly. It has been found that this static pressure is a maximum for a quantity of magnetic liquid equal to 1.5 times the volume of the sealing gap, and that an increase in this quantity of magnetic liquid will not further benefit the static pressure.

However, this quantity of magnetic liquid presents the problem that, for example in storage, transport or the like circumstances of the sealing assembly, the static pressure decreases with time, namely to about 40% within about 5 hours. This phenomenon is a consequence of agglomeration effects in the magnetic liquid.

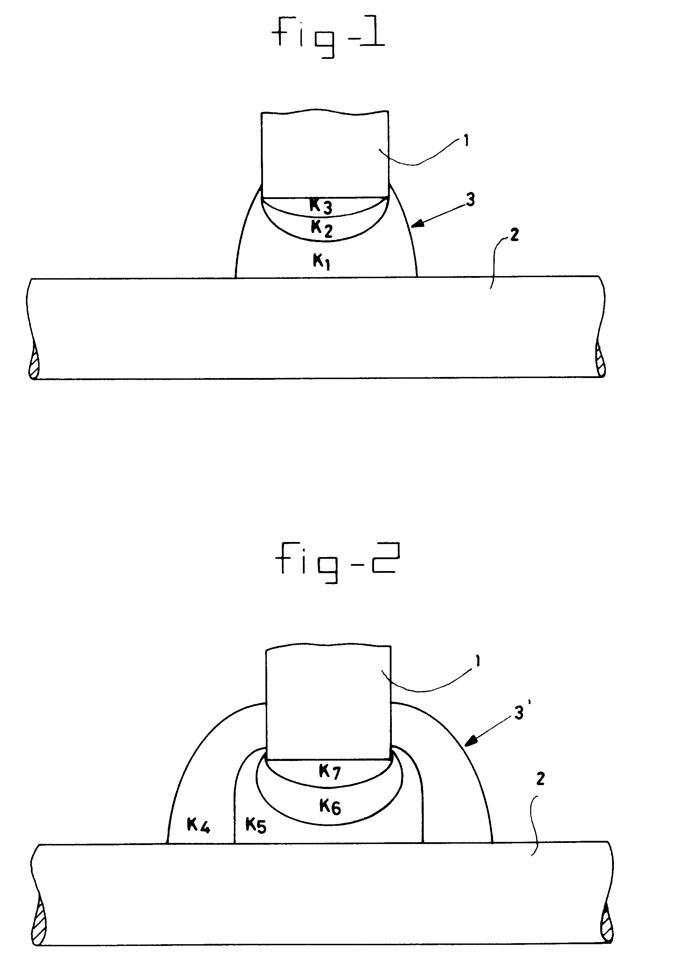

Further, the magnetic liquid at this quantity thereof, has a tendency to separate into zones of differential concentration of the magnetic particles that the liquid contains, as a result of the non-homogeneity of the magnetic field in the sealing gap, so that under certain circumstances there is danger in rotation of the shaft that magnetic liquid will be forced out of the sealing gap. Fig. 1 of the accompanying drawing shows such zones, the concentration K₁ of the magnetic particles in the zone in question being less than the normal uniform concentration K, and moreover K₁ < K₂ < K₃.

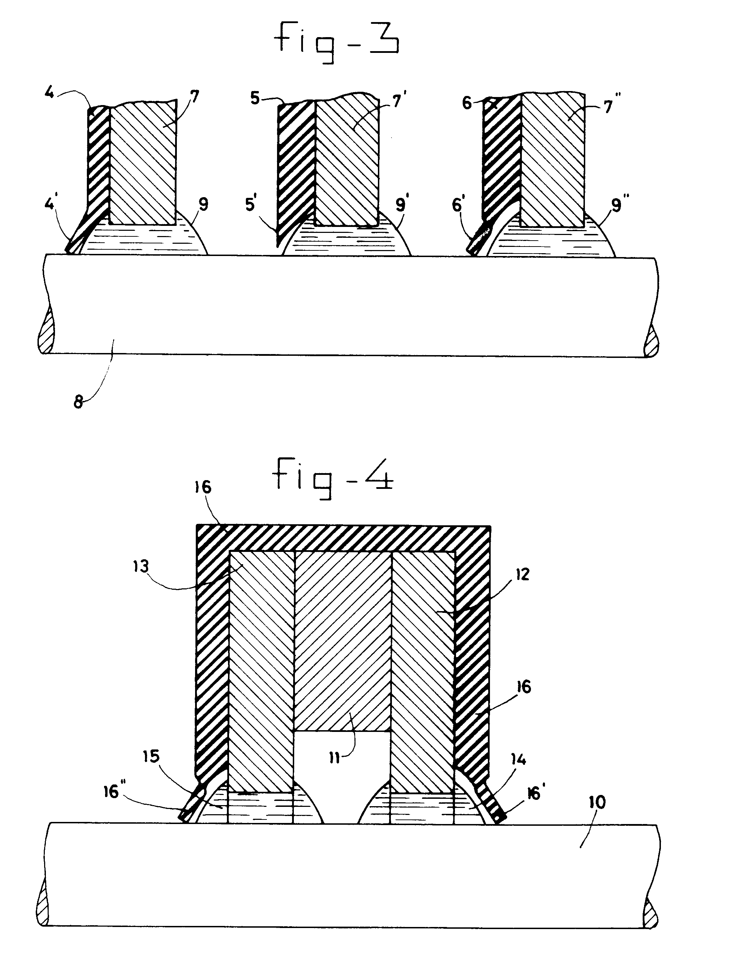

The two disadvantages mentioned may however be overcome by employing a quantity of magnetic liquid amounting to 2.5 times the volume of the sealing gap. Then a concentration distribution is obtained as shown in Fig. 2, where in the outermost zone a concentration K₄ < K is obtained, and in the inner zones, concentrations K₅, K₆, K₇, where K₅ > K, K₆ > K₅ aid K₇ > K₆, so that throughout the innermost zone the concentration is greater than K.

On the other hand, a quantity of magnetic liquid amounting to 2.5 times the volume of the sealing gap is difficult to attain because then, under dynamic conditions, magnetic liquid present outside the sealing gap will be spread over the surrounding parts of the assembly and contaminate them.

In the known sealing assembly, the lip-like ends prevent the magnetic liquid from being flung away under dynamic conditions. Nevertheless, the sealing action of the magnetic liquid might be impaired having regard to the relatively large distance which is present between the lip-like ends and the shaft. As a consequence of this relatively large distance, the function of the lip-like ends is achieved only after the magnetic liquid, under the influence of dynamic forces, has already moved away from the shaft.

The aim of the invention is to provide a sealing assembly of the type described which offers a more reliable sealing action. This is achieved by the characterizing features of Claim 1.

Surprisingly, it has been found that this covering member, simple in itself, has the effect that the quantity of magnetic liquid may now be 2.5 times the volume of the sealing gap or more, without any spreading of the magnetic liquid present outside of the sealing gap under dynamic conditions.

In the case of a sealing assembly having two armatures, each being in connection with a respective pole of the annular permanent magnet, so that two sealing gaps located at a distance from each other and filled with magnetic liquid are formed, advantageously according to the invention the covering member comprises an annular trough-like member open inward that embraces the armatures and the extremity of the permanent magnet, and the edges of which are each in the form of the said lip-like extremity.

The invention will be described in more detail with reference to the drawing, in which
Fig. 1 shows a sealing gap formed between an armature and a shaft, said gap being filled with a quantity of magnetic liquid amounting to 1.5 times the volume of the sealing gap,
Fig. 2 shows the same sealing gap as in Fig. 1, this gap being filled with a quantity of magnetic liquid amounting to 2.5 times the volume of the sealing gap,
Fig. 3 shows three embodiments of the covering member according to the invention, and
Fig. 4 shows a sealing gap according to the invention having two armatures.

In Fig. 1, a sealing gap formed between the free ends of an armature 1 and a shaft 2 is shown, filled with a quantity of magnetic liquid 3 amounting to 1.5 times the volume of the sealing gap. With this quantity of magnetic liquid, a separation occurs into zones of differential concentrations of the magnetic particles, which concentration are indicated by K₁, K₂ and K₃, where K₁ < K < K₂ < K₃, and K is the normal uniform concentration of the magnetic particles in the magnetic liquid.

Fig. 2 shows the same sealing gap as in Fig. 1, but with the quantity of magnetic liquid 3' amounting to 2.5 times the volume of the sealing gap. Then in said quantity of magnetic liquid a separation occurs into zones of differential concentrations of the magnetic particles, which concentrations are indicated by K₄, K₅, K₆ and K₇, where K₄ < K < K₅ < K₆ < K₇.

In order to be able to maintain this quantity of magnetic liquid in the sealing gap without danger that, under dynamic conditions, magnetic liquid present outside of the sealing gap will be spread over the surrounding parts of the assembly, the sealing assembly according to the invention is provided with a covering member.

Fig. 3 shows three embodiments of this covering member, 4, 5, 6 respectively, arranged against one side of the armatures 7, 7′ and 7˝ respectively, which armatures together with the shaft 8 form sealing gaps filled with a quantity of magnetic liquid 9, 9′, 9˝ respectively.

The covering members 4, 5, 6 have lip-like extremities 4′, 5′ and 6′ respectively, each of which essentially together with a part of the shaft 8 projecting from the sealing gap bounds a space near one side of the sealing gap. These lip-like ends are of different shapes depending on the requirements imposed upon these parts, including whether they will make sealing contact with the shaft.

The sealing assembly shown in Fig. 4 in order to form a seal by means of a magnetic liquid around a shaft 10, capable of being driven in rotation, comprises an annular permanent magnet 11 having two armatures 12 and 13 in contact with it. Each armature 12, 13 forms, with the shaft 10, a sealing gap filled with a quantity of magnetic liquid 14, 15. The covering member 16 is in the form of an annular trough open inward that embraces the armatures 12, 13 and the outside of the permanent magnet 11, so that this covering member also keeps the two armatures 12, 13 and the permanent annular magnet 11 in place. The edges of the covering member 16 are in the form of lip-like parts 16′, 16˝, similar to the lip-like part 6′ shown in Fig. 3.

The covering member 16 is made for example of a polymer, rubber or some non-magnetic metal.

When it is desired that the sealing assembly be electrically conductive, for example to carry off static charge in a computer disk drive, carbon particles may be incorporated in the rubber of the covering member.

## Claims

1. Sealing assembly to form a seal by means of a magnetic liquid (9, 9', 9'') around a shaft (8) capable of being driven in rotation, comprising a permanent magnet (11) and at least one armature (7, 7', 7'') being in connection with one of the poles thereof, the free end of which armature (7, 7', 7'') is located at a short distance from the shaft (8) to form an annular sealing gap filled with a quantity of the magnetic liquid (9, 9', 9'') to be held within said sealing gap by the magnetic field generated by the permanent magnet (11) by way of the armature (7, 7', 7''), whereby at least one covering member (4; 5; 6; 16) is mounted on the armature (7, 7', 7'') which covering member (4; 5; 6; 16) has a lip-like end (4'; 5'; 6'; 16'; 16'') directed outward in relation to that side and towards the shaft (8; 10), characterized in that the lip-like end (4'; 5'; 6'; 16'; 16'') of the covering member (4; 5; 6; 16;) is nearly or completely in sealing contact with the circumferential surface of the shaft (8) and is in close proximity to the magnetic liquid (9, 9', 9'') in the sealing gap in order to avoid that, under dynamic conditions, magnetic liquid present outside the sealing gap will be spread over the surrounding parts of the assembly, even when the quantity of magnetic liquid is 2.5 times the volume of the sealing gap or more.

2. Sealing assembly according to claim 1, wherein said assembly comprises two armatures (12, 13) each being in connection with a respective pole of an annular permanent magnet (11), forming two sealing gaps located at a distance from each other and filled with magnetic liquid (14, 15), characterized in that the covering member (16) comprises an annular, trough-like member (16) open inward and embracing the armatures (12, 13) and the outside of the permanent magnet (11), the edges of which member are each embodied in the said lip-like end part (16', 16'').

3. Sealing assembly according to claim 2, characterized in that the trough-like member (16) is made of rubber or similar material.

4. Sealing assembly according to claim 3, characterized in that carbon particles are incorporated in the rubber to render it electrically conductive.

## Patentansprüche

1. Dichtungsvorrichtung zur Bildung einer Dichtung mit einer magnetischen Flüssigkeit (9, 9', 9 '') um eine rotierend antreibbare Welle (8), enthaltend einen Permanentmagneten (11) und wenigstens einen mit dessen einem Pol in Verbindung stehenden Anker (7, 7', 7''), dessen freies Ende sich in kurzer Entfernung von der Welle (8) befindet, um einen ringförmigen Dichtungsspalt zu bilden, der mit einer Menge der magnetischen Flüssigkeit (9, 9', 9'') gefüllt ist, welche innerhalb des Dichtungsspalts durch das vom Permanentmagneten (11) über den Anker (7, 7', 7'') erzeugte Magnetfeld zu halten ist, wobei wenigstens ein Abdeckglied (4; 5; 6; 16) auf dem Anker (7, 7', 7'') angebracht ist, welches ein mit Bezug auf diese Seite nach außen und zur Welle (8; 10) hin gerichtetes lippenartiges Ende (4'; 5'; 6'; 16'; 16'') hat, **dadurch gekennzeichnet**, daß das lippenartige Ende (4'; 5'; 6', 16'; 16'') des Abdeckglieds (4; 5; 6; 16) an der Umfangsfläche der Welle (8) dichtend anliegt oder fast anliegt und in unmittelbarer Nähe der magnetischen Flüssigkeit (9, 9', 9'') im Dichtungsspalt ist, um zu vermeiden, daß unter dynamischen Bedingungen magnetische Flüssigkeit, die sich ausserhalb des Dichtungsspalts befindet, über die umliegenden Teile der Vorrichtung verteilt wird, selbst wenn die Menge der magnetischen Flüssigkeit 2,5 mal so groß wie das Volumen des Dichtungsspalts oder größer ist.

2. Dichtungsvorrichtung nach Anspruch 1 mit zwei Ankern (12, 13), die jeweils in Verbindung mit einem Pol eines ringförmigen Permanentmagneten (11) stehen und zwei mit Zwischenabstand angeordnete, mit magnetischer Flüssigkeit (14, 15) gefüllte Dichtungsspalte bilden, **dadurch gekennzeichnet**, daß das Abdeckglied (16) ein ringförmiges, rinnenartig nach innen offenes, die Anker (12, 13) und die Außenseite des Permanentmagneten (11) umschließendes Teil (16) ist, dessen Randkanten jeweils das lippenartige Endteil (16', 16'') verkörpern.

3. Dichtungsvorrichtung nach Anspruch 2, **dadurch gekennzeichnet**, daß das rinnenartige Teil (16) aus Gummi oder einem ähnlichen Material besteht.

4. Dichtungsvorrichtung nach Anspruch 3, **dadurch gekennzeichnet**, daß der Gummi Kohleteilchen enthält, um ihn elektrisch leitend zu machen.

## Revendications

1. Dispositif d'étanchéité destiné à former, au moyen d'un liquide magnétique (9, 9', 9''), un joint autour d'un arbre (8) pouvant être entraîné en rotation, qui comprend un aimant permanent (11) et au moins une armature (7, 7', 7'') reliée avec l'un des pôles de celui-ci, armature (7, 7', 7'') dont l'extrémité libre est située à une courte distance de l'arbre (8) pour former un intervalle annulaire d'étanchéité rempli d'une certaine quantité de liquide magnétique (9, 9', 9'') maintenu dans ledit intervalle d'étanchéité par le champ magnétique généré par l'aimant permanent (11) au moyen de l'armature (7, 7', 7''), au moins un élément recouvrant (4, 5, 6, 16) étant monté sur l'armature (7, 7', 7'') élément recouvrant (4, 5, 6, 16) qui présente une extrémité en forme de lèvre (4', 5', 6', 16', 16'') dirigée vers l'extérieur par rapport à ce côté et en direction de l'arbre (8, 10), caractérisé en ce que l'extrémité en forme de lèvre (4', 5', 6', 16', 16'') de l'élément recouvrant (4, 5, 6, 16) est presque, ou totalement, en contact d'étanchéité avec la surface de la circonférence de l'arbre (8) et se trouve à proximité étroite du liquide magnétique (9, 9', 9'') se trouvant dans l'intervalle d'étanchéité afin d'éviter que, dans des conditions dynamiques, le liquide magnétique présent à l'extérieur de l'intervalle d'étanchéité ne s'étale sur les parties environnantes du dispositif, même si la quantité de liquide magnétique vaut 2,5 fois le volume de l'intervalle d'étanchéité, ou davantage.

2. Dispositif d'étanchéité selon la revendication 1, dans lequel ledit dispositif comprend deux armatures (12, 13), chacune reliée avec un pôle respectif d'un aimant annulaire permanent (11) en formant deux intervalles d'étanchéité situés à une certaine distance l'un de l'autre et remplis de liquide magnétique (14, 15), caractérisé en ce que l 'élément recouvrant (16) comprend une partie (16) annulaire, semblable à une auge, ouverte vers l'intérieur et entourant les armatures (12, 13) et l'extérieur de l'aimant permanent (11), les bords de cette partie constituant chacun ladite partie d'extrémité en forme de lèvre (16', 16'').

3. Dispositif d'étanchéité selon la revendication 2, caractérisé en ce que la partie (16) semblable à une auge est faite de caoutchouc ou de matière semblable.

4. Dispositif d'étanchéité selon la revendication 3, caractérisé en ce que des particules de carbone sont incorporées dans le caoutchouc pour le rendre électroconducteur.
